# EUROPEAN PATENT SPECIFICATION

(11) **EP 2 092 835 B1**
(45) Date of publication and mention of the grant of the patent: **08.08.2012**
(21) Application number: 08010417.7
(22) Date of filing: 09.06.2008
(51) Int. Cl.: A23L 1/00, A23L 1/16, A23P 1/08

(54) **Method and apparatus for preparing lasagne**
Verfahren und Vorrichtung zur Herstellung von Lasagne
Méthode and appareil pour préparer lasagna

(30) Priority: 22.02.2008 IT VI20080044
(43) Date of publication of application: 26.08.2009
(73) Proprietor: BERTAGNI 1882 S.p.A., 36057 Arcugnano (VI) (IT)
(72) Inventor: Bolla, Enrico, 37023 Grezzana (Verona) (IT); Buzzacaro, Giuseppe, 37036 San Martino Buon Albergo (Verona) (IT)
(74) Representative: Maroscia, Antonio

(56) References cited:
- EP-A- 0 323 538
- EP-A- 0 882 406
- CA-C- 1 299 434
- US-A- 3 798 343
- US-A- 4 418 085
- US-A- 4 711 165
- US-A- 5 780 091
- US-A- 5 939 113
- US-A1- 2005 181 100
- US-B1- 6 558 720

## Description

### Field of invention

The present invention finds application in the food industry and particularly relates to a method and an apparatus for preparing lasagne, particularly lasagne alla Bolognese.

### Background of the invention

The term "lasagne" is intended to indicate a cookery product composed of pasta layers and filling layers. The best known lasagne are the "lasagne alla Bolognese", which are composed of egg pasta, Bolognese sauce (a meat-based tomato sauce) and béchamel sauce.

Lasagne exist in various forms, all invariably composed of pasta layers and tomato sauce and béchamel layers alternated as desired. The final layer is sprinkled with grated mature cheese.

Current industrial production is essentially based on a method including the steps of preparing the filling, forming the pasta into a sheet and dosing the filling onto the pasta sheet to obtain at least one layer of semi-processed lasagne, to be later packaged and refrigerated for distribution and sale.

After preparation, the pasta is cut into portions and manually or semiautomatically placed in the final packaging tray. Each layer of pasta is topped with a dose of hot filling, such as tomato sauce, béchamel or a mixture of tomato sauce and béchamel.

This step is repeated a certain number of times until the desired product (with 3, 4 or 5 layers) is obtained.

Typically, tomato sauce and béchamel dosing occurs at very high temperatures (at least above 70°C, preferably above 80°C), to provide even distribution thereof over the pasta and facilitate some sort of self-pasteurization of the product. For the above step to be carried out in safely hygienic conditions, dosing may occur in a clean room under nitrogen overpressure or sterile (filtered) air conditions, if the presence of personnel is provided.

Hot dosing causes lasagne to be maintained at high temperatures for long times, leading to qualitative degradation of pasta, that becomes overcooked, and of the filling, because the tomato sauce and the béchamel continuously mix throughout the dosing step, thereby losing most of their original organoleptic properties.

The hot tomato sauce and béchamel dosing system does not allow operation in a clean environment due to the presence of vapors, condensation, and hot sprays. Also, the presence of personnel to ensure that the tray is properly conveyed through the various dosing stations, significantly reduces air quality in the clean room, if present.

US-5 939 113 discloses a free-standing lasagna product having a crisp and chewy bottom pasta layer and at least one soft and moist and/or al dente texture intermediate pasta layer. The bottom pasta layer has an upwardly extending ream which encircles the periphery of the product and is par-baked in a cooking vessel to stiffen and provide a monolithic container for the product. The components of the filling are not cooked but simply combined, then immediately allowed to condition overnight at refrigerator temperature prior to use however the filling is not refrigerated during deposition. The product a sort of pie that resembles a pizza especially in view of the bottom crust layer.

EP 0 323 538 discloses a machine and method for layering sheets of food material, particularly for forming sheets of lasagna in layers and for inserting a filling between the layers and for cutting into portions automatically. The filling is a sauce that is neither cooked nor cooled before deposition between the layers. Nowhere in this prior art document is disclosed a set or means for preserving the organoleptic properties of the filling or of the pasta layers.

US-4 418 085 discloses a process for manufacturing a multi-layer rolled product comprising alternate layers of pasta and sauce, in which the pasta is a single folded continuous sheet and the sauce is held in place by at least one of the folds in the sheet of pasta, with no information as to the cooking and cooling of the components.

US-5 780 091 discloses a method for producing a partially cooked instant pasta solid sauce composition in the form of closely wound compacted two layer spiral having no provision for controlling the deposition of the sauce.

CA-1 299 434 discloses a method and an apparatus for preparing sheets of pasta to be handled by a person to prepare lasagna.

EP- 0 882 406 discloses a method of cooking a plurality of segments of alimentary products each comprising at least two layers of pasta enclosing a sheet of Bolognaise sauce, adding a cooking liquid and heating the segments and the liquid. This prior art document does not teach any cooling step during preparation of the alimentary product.

EP-1230861 discloses a process of stabilization of cooked pasta compositions against the development of toxins from pathogenic bacterial contaminants by incorporation in the pasta dough of nisin-containing cultured whey. The cooked pasta compositions obtained with this pasta dough are stable at refrigeration temperatures for 90 days or longer, and preferably for 120 days or longer, and require no further cooking.

### Summary of the invention

The object of the present invention is to overcome the above drawbacks, by providing a method and an apparatus that is highly efficient and relatively cost-effective.

A particular object is to provide a method and an apparatus for preparing lasagne, providing a final product of high organoleptic quality, comparable to homemade lasagne.

A further object is to provide a method and an apparatus for preparing lasagne, that ensures maximized asepsis and hygiene of the various steps of the process.

These and other objects, as more clearly explained hereafter, are fulfilled by a method as claimed in the attached claim 1.

In another aspect, the invention relates to an apparatus as defined in the attached claim 7.

Advantageous embodiments of the invention are defined in accordance with the dependent claims.

### Brief description of the drawings

Further features and advantages of the invention will be more apparent from the detailed description of a preferred, non-exclusive embodiment of a method and an apparatus according to the invention, which is described as a non-limiting example with the help of the annexed drawings, in which:
FIG. 1 is a schematic view of an apparatus according to the invention;
FIG. 2 is a top view of the dosing station of the apparatus of Figure 1;

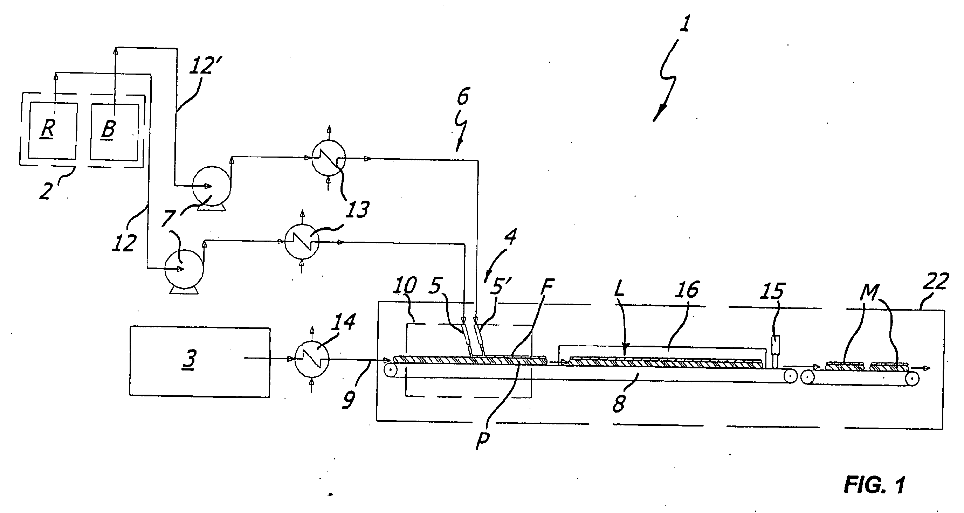

FIG. 1 is a schematic view of lasagne obtained with the method and/or apparatus of the invention.

### Detailed description of a preferred embodiment

Referring now to the above figures, the method and apparatus of the invention may be advantageously employed for the preparation of lasagne, particularly lasagne alla Bolognese.

The apparatus, generally designated by numeral 1, essentially comprises means 2 for providing the filling F, means 3 for providing a pasta sheet P and means 4 for dosing the filling F onto the pasta sheet P.

As used herein, the term "provision" and derivatives thereof, designates the preparation of a relevant component for a relevant process above, to obtain a layer of semi-processed lasagne L.

The filling (F) that comes out of the dosing units 5, 5', 5", 5'" is deposited onto the pasta sheet P in a substantially cold or cooled state, so that its organoleptic properties can be preserved substantially unchanged.

The temperature at which the filling F is deposited on the pasta sheet P, which is preferably the temperature that the filling F can have when it contacts the surface of the pasta P, may be low enough to allow even deposition thereof on the pasta P, as a "semisolid" strip of the desired thickness. Those skilled in the art may adjust such temperature as desired, to a value lower than or equal to the operating environment.

The dosing temperature may be low enough to avoid any change to the special organoleptic properties of the filling F, while allowing the latter to maintain optimal rheological properties, and particularly such a viscosity as to allow it to be pumped along the line 6 without damaging it.

Advantageously, the filling F may be deposited onto the pasta sheet P at a temperature below 25°C, preferably below 20°C and more preferably from 5°C to 15°C.

Thanks to these low temperatures direct cold dosing of the filling F mat take place onto the pasta P when it lies on the belt conveyors outside the final packaging container, for enhanced hygiene safety.

Such configuration of the apparatus further allows the filling F to be deposited with different thicknesses based on production requirements, such as from 7 to 11 mm. For example, the strip 23 of tomato sauce R may be designed to have a thickness differing from that of the strip 23' of béchamel B, depending on the desired product and in response to organoleptic and cost balancing optimization.

Also, with this configuration, the béchamel B ad the tomato sauce R may be deposited onto the pasta sheet P in adjacent layers, and will not mix on the pasta P due to their low temperatures.

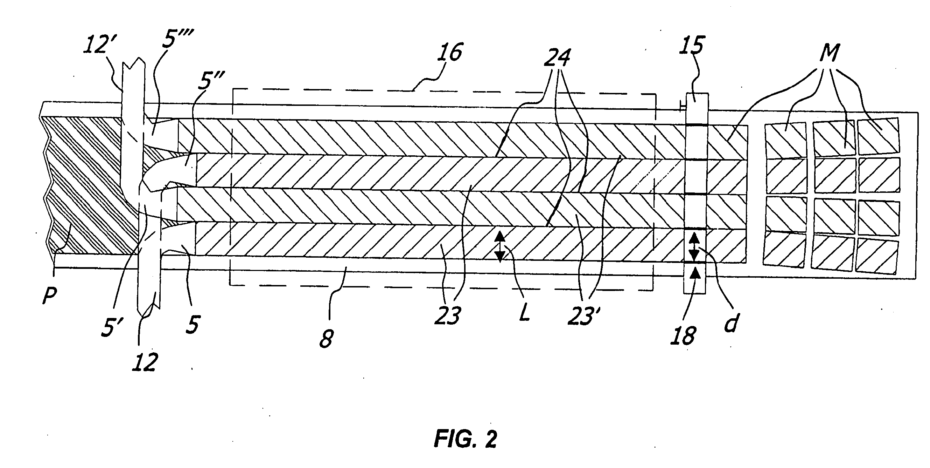

Therefore, the output of the area 10 with the dosing means 4 will be semi-processed lasagne L composed of a lower layer of pasta P and an upper layer of filling F, composed of adjacent strips of tomato sauce R and béchamel B, designated by numerals 23, 23' respectively in Figure 2.

The filling F may be withdrawn in a cold state from a storage site, or may be cooled after its preparation on the cooker 2, preferably before dosing.

Conveniently, the apparatus 1 may include first means 13 for cooling the filling, situated downstream of the means 2 for preparing it, and preferably upstream of the dosing means 4 along the first fluid connection line 6. The first cooling means 13 may include heat exchangers, for example of the tube-in-tube or scraped-surface type.

The cooling step may either occur prior than the dosing step or occur and/or continue during such step. This means that the filling F may be cooled before reaching the dosing units 5, 5', 5", 5'" and/or be cooled during dosing.

Suitably, the first cooling means 13 are situated directly downstream of the means 2 for providing the filling F, so that the step for cooling the latter comes immediately after its cooking, with no steps intervening therebetween. Thus, the bacterial count in the filling F remains at very low levels, thanks to the immediately preceding cooking.

In a preferred, non exclusive embodiment, second cooling means 14 may be provided for cooling the pasta sheet P to a temperature below 30°C and preferably below 20°C. The second cooling means 14, that may consist of cold water and/or air jets, may be arranged along the second connection line 9 upstream from the area 10 with the dosing means 4, as shown in Figure 1.

By this additional cooling step, the pasta P will not be subjected to excessive thermal stresses deriving from contact with the cold filling F during the following dosing step.o

Conveniently, the apparatus 1 may include cutting means for cutting the layer of semi-processed lasagne L, generally indicated by numeral 15, to obtain a plurality of portions M of predetermined shape and size. The cutting means 15 may consist, for example, of a station equipped with metal blades, ultrasounds, laser or a water-jet cutting arrangement.

In a preferred, non exclusive embodiment, the cutting means 15 may be designed to cut the semi-processed lasagne L at the output from the area 10 at the points of separation 24 of the strips 23, 23' of the tomato sauce R and béchamel B.

In other words, the longitudinal cuts may be substantially as wide as the strips of béchamel B and tomato sauce R. The cutting means 15 may include, for instance, sharp-edged tools 18 whose mutual distance d corresponds to the width I of the strips 23', 23 of béchamel B and tomato sauce R, which may be in turn controlled, for instance, by the size of the output opening of the dosing units 5, 5" and 5', 5"'.

The length of the portions M of lasagne may be controlled by another sharp-edged tool sliding along the semi-processed product L perpendicular to the direction of feed thereof.

The apparatus may further include third cooling means 16 interposed between the dosing means 4 and the cutting means 15 for cooling said at least one layer of semi-processed lasagne to a temperature below 4°C, and preferably below 0°C to improve the cutting phase.

The third cooling means 16 may consist, for example, of a liquid nitrogen- or air-cooled tunnel for the passage of the semi-processed lasagne L coming out of the area 10 in which the filling F is dosed onto the pasta P.

Thanks to this additional cooling step for cooling to negative temperatures, the portions M that come out of the area with the cutting means 15 will actually have the form of lasagna "bricks", each formed of a lower layer of pasta P and an upper layer of filling F, which may be in turn composed of béchamel B only, tomato sauce R only or a mixture of the two. The upper layer may be coextensive with the lower level. The thickness of the filling F may be of 7 to 11 mm, according to specific requirements.

Each portion or "brick" M can be clearly distinguished from the others, has a well-defined geometry and no layer of edible or non-edible material surrounding it.

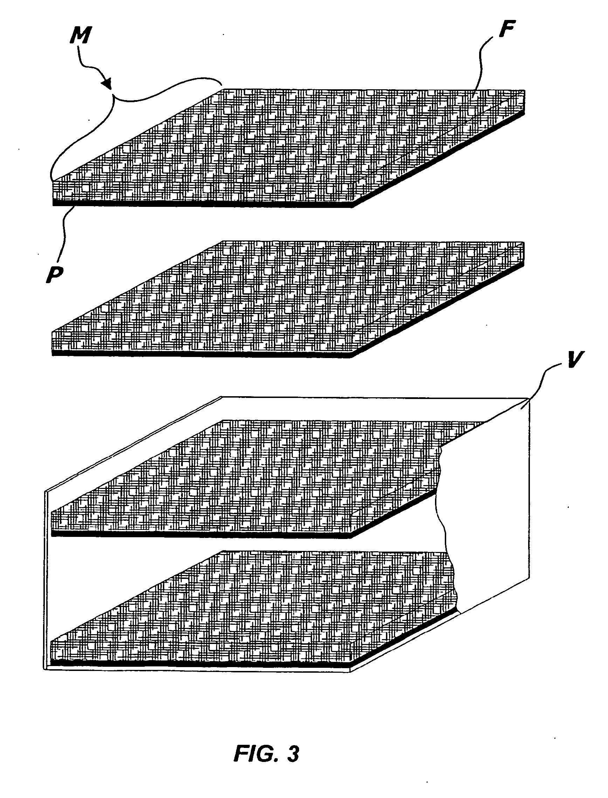

After the cutting step, the portions M are carried to the packaging station. Here, the various portions M may be placed in a tray V capable of containing one or more portions. In the latter case, as is known in the art, gravity deposition may be provided, to obtain trays V containing, for example, three, four or five portions M in overlapped or side-by-side positions, as shown in figure 3.

In any case, regardless of the number of portions in each tray, the various portions M will be distinguishable from each other, because the top surface of the filling F of one portion will not be permanently attached to the bottom surface of the pasta layer P of the overlying portion.

The step of filling the tray, whose size may be comparable to that of the portion M, may be followed by a step in which grated cheese is dosed onto the surface of the product. For this purpose, as is known in the art, the trays are fed below a grated cheese sprinkling station, with cheese being deposited by gravity onto the surface of the portion.

The grated cheese will be always deposited onto a cold surface, as a further guarantee of quality of the raw materials being used. Grilling of cheese to form crusts will only occur upon final preparation of lasagne at home.

The tray will be thus fed to the packaging station, where it will be sealed. Here, the product will be packaged at a temperature well below 4°C, due to the preceding treatments. Cold packaging of the product is the best solution to maintain the initial microbial count unchanged.

Now, the trays directed to the market of "fresh products" will be placed in a refrigerator at 0/4°C, whereas those directed to the market of "frozen products" will be frozen to -18°C. Freezing of the portions M may also occur upstream from the packaging step.

Advantageously, the dosing area 10 and/or the cutting area and/or the packaging area may include means for creating a protective atmosphere or filtered air, possibly by introducing nitrogen and/or sterile filtered air therein.

In a preferred non exclusive embodiment, the entire section 22 downstream from the provision means 2, 3 may be equipped with means for protective atmosphere generation, so that all the steps next to the preparation of the filling F and the pasta P can be carried out under protective atmosphere or filtered air, preferably including packaging.

The foregoing disclosure clearly shows that the method and apparatus of the invention fulfill the intended objects, and particularly the object of preparing lasagne with the final product having a high organoleptic quality, comparable to homemade lasagne.

Furthermore, since all production steps are carried out at low temperature or under protective atmosphere, asepsis and hygiene are effectively ensured throughout the process.

Easy handling of the various portions M, distinct and separate from each other, will ensure high automation of the whole process, and minimize human personnel requirements.

The invention is susceptible of a number of changes and variants, within the inventive concept disclosed in the appended claims. All the details may be replaced by other technically equivalent elements, and the materials may be different depending on different needs.

While the invention has been described with particular reference to the accompanying figures, the numerals referred to in the disclosure and claims are only used for the sake of a better intelligibility of the invention and shall not be intended to limit the claimed scope in any manner.

## Claims

1. A method for preparing lasagna, particularly Bolognese lasagna, comprising the steps of:
- preparing and cooking a sheet (P) of pasta;
- preparing and cooking a filling (F);
- cooling said filling (F) immediately after cooking it to reduce the level of the bacterial count in the filling (F);
- depositing the filling (F) onto the sheet (P) to obtain at least one layer of semi-processed lasagna (L);
**characterized in that** the sheet (P) of pasta is prepared using no anti-bacterial preparation, and **in that** the cooled filling (F) is deposited onto the pasta sheet (P) at a temperature lower than the ambient operating temperature to maintain the bacterial count of the filling (F) at very low levels and to preserve the organoleptic properties of the pasta sheet (P) during deposition, said at least one layer of semi-processed lasagna (L) being cut into a plurality of portions or "bricks" (M) of predetermined shape and size having no layer of edible or non edible material surrounding it, before said cutting step said at least one layer of semi-processed lasagna (L) being further subjected to a cooling step at a temperature lower than said deposition temperature to improve said cutting step.

2. Method as claimed in claim 1, wherein the temperature (T) of deposition of the filling (F) is lower than 25°C, preferably lower than 20°C and more preferably from 5°C to 15°C.

3. Method as claimed in one or more of the preceding claims, wherein said step of providing the pasta sheet (P) includes a step in which the latter is cooled, before said dosing step, to a temperature below 30°C, and preferably below 20°C.

4. Method as claimed in one or more of the preceding claims, wherein the temperature at which said at least one layer of semi-processed lasagna (L) is cooled before cutting is below 4°C and preferably below 0°C.

5. Method as claimed in one or more of the preceding claims, wherein said filling (F) is composed of tomato sauce (R) and béchamel (B) wherein, during said dosing step, said tomato sauce (R) and said béchamel (B) being deposited onto said pasta sheet (P) independently of each other to form semi-processed lasagne (L) only composed of a lower layer defined by said pasta sheet (P) and an upper layer composed of adjacent strips (23, 23') of tomato sauce (R) and béchamel (B).

6. Method as claimed in claim in one or more of the preceding claims, comprising a packaging step in which a predetermined number of said portions or "bricks" (M) are placed in a tray (V) which is subsequently sealed to obtain a packaged product.

7. Apparatus for preparing lasagna, particularly Bolognese lasagna according to the method as claimed in one or more of the preceding claims, comprising:
- means (2) for providing a filling (F);
- means (3) for providing a pasta sheet (P);
- means (4) for depositing the filling (F) onto the pasta sheet (P) to obtain at least one layer of semi-processed lasagne (L);
- a first line (6) for fluid connection of said means (2) for providing the filling (F) with said deposition means (4);
- a second line (9) for connection of said means (3) for providing the pasta sheet (P) with said deposition means (4);
wherein said means (2) for providing the filling (F) include a cooking equipment in which the filling (F) is cooked,
**characterized in that** it further comprises first cooling means (13) provided directly downstream of the means (2) for cooking the filling (F) for cooling this latter before and/or during deposition to a temperature lower than the ambient operating temperature, cutting means (15) for cutting said at least one layer of semi-processed lasagna (L) into a plurality of portions (M) of predetermined shape and size, third cooling means (16) interposed between said deposition means (4) and said cutting means (15) for cooling said at least one layer of semi-processed lasagne (L) to a temperature lower than said deposition temperature.

8. Apparatus as claimed in claim 7, wherein said deposition temperature is below 25°C, preferably below 20°C and more preferably from 5°C to 15°C.

9. Apparatus as claimed in one or more of the preceding claims, comprising second cooling means (14) for cooling said pasta sheet (P) to a temperature below 30°C, and preferably below 20°C, said second cooling means (14) being arranged along said second line (9) upstream from said dosing means (4).

10. Apparatus as claimed in claim 7, wherein said cutting temperature is below 4°C, preferably below 0°.

11. Apparatus as claimed in claim 7, wherein said first fluid connection line comprises first and second conduits (12, 12') for independently feeding tomato sauce (R) and béchamel (B) respectively to said deposition means (4).

12. Apparatus as claimed in claim 11, wherein said deposition means (4) include a plurality of dosing units (5, 5', 5", 5"') in side-by-side fluid relation, and alternately connected with said first and second conduits (12, 12') for depositing adjacent strips (23, 23') of either tomato sauce (R) or béchamel (B), each having a predetermined width (1), onto said pasta sheet (P).

13. Apparatus as claimed in claim 12, wherein said cutting means (15) include sharp-edged tools (18) whose mutual distance (d) substantially corresponds to said width (I) of each of said strips (23', 23), for cutting said at least one layer of semi-processed lasagna (L) at the separation points (24) therebetween.

## Patentansprüche

1. Verfahren zum Herstellen von Lasagne, insbesondere Lasagne Bolognese, welches folgende Schritte aufweist:
- Zubereiten und Kochen einer Platte (P) aus Nudelteig bzw. Teigwaren;
- Zubereiten und Kochen einer Füllung (F);
- Kühlen der Füllung (F) unmittelbar nach dem Kochen, um das Niveau der Keimzahl bzw. des Keimgehalts in der Füllung (F) zu senken;
- Aufbringen der Füllung (F) auf die Platte (P), um mindestens eine Schicht vorverarbeiteter bzw. halbverarbeiteter Lasagne (L) zu erhalten;
**dadurch gekennzeichnet, dass** die Platte (P) der Teigware ohne Verwendung einer anti-bakteriellen Zubereitung zubereitet ist, und dass die gekühlte Füllung (F) auf die Teigwarenplatte (P) bei einer Temperatur aufgebracht wird, welche niedriger als die umgebende Arbeitstemperatur ist, um den Keimgehalt der Füllung (F) auf sehr niedrigen Niveaus zu halten, und um die organoleptischen Eigenschaften der Teigwarenplatte (P) während der Aufbringung zu erhalten, wobei die mindestens eine Schicht der halbverarbeiteten Lasagne in eine Vielzahl von Teilen oder "Klötzen" (M) von vorbestimmter Form und Größe, die keine sie umgebende Schicht von essbarem oder nicht essbarem Material besitzt, zerschnitten wird, wobei die mindestens eine Schicht von halbverarbeiteten Lasagne (L) vor dem Schneideschritt weiter einem Kühlungsschritt unterworfen wird, und zwar bei einer Temperatur, die niedriger als die Aufbringungstemperatur ist, um den Schneideschritt zu verbessern.

2. Verfahren nach Anspruch 1, wobei die Temperatur (T) der Aufbringung der Füllung (F) niedriger als 25°C, vorzugsweise niedriger als 20°C und insbesondere vorzugsweise von 5°C bis 15°C ist.

3. Verfahren nach einem oder mehreren der vorangegangenen Ansprüche, wobei der Schritt des Lieferns der Teigwarenplatte (P) einen Schritt aufweist, bei dem Letztere, vor dem Dosierungsschritt, auf eine Temperatur unter 30°C, und vorzugsweise unter 20°C, gekühlt wird.

4. Verfahren nach einem oder mehreren der vorangegangenen Ansprüche, wobei die Temperatur, auf die die mindestens eine Schicht halbverarbeiteter Lasagne (L) vor dem Schneiden abgekühlt wird, unter 4°C und vorzugsweise unter 0°C liegt.

5. Verfahren nach einem oder mehreren der vorangegangenen Ansprüche, wobei die Füllung (F) aus Tomatensauce (R) und Bechamelsauce (B) besteht, wobei die Tomatensauce (R) und die Bechamelsauce (B) während des Dosierungsschritts unabhängig voneinander auf die Teigwarenplatte (P) aufgebracht wird, um die halbverarbeiteten Lasagne (L) zu bilden, welche nur aus einer unteren Schicht besteht, die von der Teigwarenplatte (P) definiert wird, und einer oberen Schicht, die aus benachbarten Streifen (23, 23') von Tomatensauce (R) und Béchamelsauce (B) besteht.

6. Verfahren nach einem oder mehreren der vorangegangenen Ansprüche, welches einen Verpackungsschritt aufweist, bei dem eine vorbestimmte Anzahl von Teilen oder "Klötzen" (M) auf eine Schale (V) platziert wird, welche nachfolgend abgedichtet bzw. versiegelt wird, um ein verpacktes Produkt zu erhalten.

7. Vorrichtung zum Zubereiten von Lasagne, insbesondere Lasagne Bolognese, gemäß dem Verfahren, wie es in einem oder mehreren der vorangegangenen Ansprüche beansprucht wird, welche Folgendes aufweist:
- Mittel (2) zum Liefern einer Füllung (F);
- Mittel (3) zum Liefern einer Teigwarenplatte (P);
- Mittel (4) zum Aufbringen der Füllung (F) auf die Teigwarenplatte (P), um mindestens eine Schicht von halbverarbeiteten Lasagne (L) zu erhalten;
- eine erste Leitung (6) zur Flüssigkeitsverbindung des Mittels (2) zum Liefern der Füllung (F) mit dem Aufbringungsmittel (4);
- eine zweite Leitung (9) zur Verbindung des Mittels (3) zum Liefern der Teigwarenplatte (P) mit dem Aufbringungsmittel (4);
wobei das Mittel (2) zum Liefern der Füllung (F) eine Kochanlage aufweist, in welcher die Füllung (F) gekocht wird,
**dadurch gekennzeichnet, dass** sie ferner erste Abkühlmittel (13) aufweist, welche direkt stromabwärts der Mittel (2) zum Kochen der Füllung (F) vorgesehen sind, um diese vor und/oder während der Aufbringung auf eine Temperatur unterhalb der umgebenden Arbeitstemperatur abzukühlen, Schneidemittel (15) zum Zuschneiden der mindestens einen Schicht halbverarbeiteter Lasagne (L) in eine Vielzahl von Teilen (M) von vorbestimmter Form und Größe, dritte Kühlmittel (16), welche zwischen den Aufbringungsmitteln (4) und den Schneidemitteln (15) angeordnet sind, um die mindestens eine Schicht halbverarbeiteter Lasagne (L) auf eine Temperatur unterhalb der Aufbringungstemperatur abzukühlen.

8. Vorrichtung nach Anspruch 7, wobei die Aufbringungstemperatur unter 25°C liegt, vorzugsweise unter 20°C und insbesondere bevorzugt zwischen 5°C und 15°C liegt.

9. Vorrichtung nach einem oder mehreren der vorangegangenen Ansprüche, welche zweite Kühlmittel (14) aufweist zum Abkühlen der Teigwarenplatte (P) auf eine Temperatur unter 30°C und vorzugsweise unter 20°C, wobei die zweiten Kühlmittel (14) entlang einer zweiten Leitung (9) stromaufwärts von den Dosierungsmitteln (4) angeordnet sind.

10. Vorrichtung nach Anspruch 7, wobei die Schneidetemperatur unter 4°C, vorzugsweise unter 0°C, liegt.

11. Vorrichtung nach Anspruch 7, wobei die erste Flüssigkeitsverbindungsleitung erste und zweite Leitungen (12, 12') aufweist, um unabhängig Tomatensauce (R) bzw. Béchamelsauce (B) an die Aufbringungsmittel (4) einzuspeisen.

12. Vorrichtung nach Anspruch 11, wobei die Aufbringungsmittel (4) eine Vielzahl von Dosierungseinheiten (5, 5', 5", 5"') in einer Seite-an-Seite angeordneten Flüssigkeitsbeziehung aufweisen, die abwechselnd mit den ersten und zweiten Leitungen (12, 12') verbunden sind, um benachbarte Streifen (23, 23') von entweder Tomatensauce (R) oder Béchamelsauce (B) auf die Teigwarenplatte (P) aufzubringen, wobei jeder eine vorbestimmte Breite (1) besitzt.

13. Vorrichtung nach Anspruch 12, wobei die Schneidemittel (15) scharfkantige Werkzeuge (18) aufweisen, deren gegenseitiger Abstand (d) im Wesentlichen der Breite (1) jedes der Streifen (23', 23) entspricht, um die mindestens eine Lage der halbverarbeiten Lasagne (L) an den dazwischen liegenden Trennstellen (24) zu zerschneiden.

## Revendications

1. Procédé de préparation de lasagnes, en particulier des lasagnes à la Bolognaise, comprenant les étapes consistant à :
- préparer et cuire une feuille (P) de pâte ;
- préparer et cuire une garniture ;
- refroidir ladite garniture (F) immédiatement après l'avoir cuite, pour réduire le niveau de la numération bactérienne dans la garniture (F) ;
- déposer la garniture (F) sur la feuille (P) pour obtenir au moins une couche de lasagnes semi-finies (L) ;
**caractérisé en ce que** la feuille (P) de pâte est préparée sans utilisation de préparation antibactérienne, et **en ce que** la garniture (F) refroidie est déposée sur la feuille de pâte (P), à une température inférieure à la température ambiante de travail, pour maintenir la numération bactérienne de la garniture (F) à de très bas niveaux et pour conserver les propriétés organoleptiques de la feuille de pâte (P) pendant le dépôt, ladite au moins un couche de lasagnes semi-finies (L) étant découpée en une pluralité de portions ou *"briques"* (M) de formes et de dimensions prédéterminées, sans aucune couche de matière comestible ou non-comestible autour d'elles, ladite au moins une couche de lasagnes semi-finies (L) étant en outre soumise, avant ladite étape de découpe, à une étape de refroidissement à une température inférieure à ladite température de dépôt, pour améliorer ladite étape de découpe.

2. Procédé selon la revendication 1, dans lequel la température (T) de dépôt de la garniture (F) est inférieure à 25°C, préférablement inférieure à 20°C, et plus préférablement de 5°C à 15°C.

3. Procédé selon une ou plusieurs des revendications précédentes, dans lequel ladite étape de fourniture de la feuille de pâte (P) comprend une étape dans laquelle cette dernière est refroidie, avant ladite étape de dosage, à une température inférieure à 30°C, et préférablement inférieure à 20°C.

4. Procédé selon une ou plusieurs des revendications précédentes, dans lequel la température à laquelle ladite au moins une couche de lasagnes semi-finies (L) est refroidie avant découpe est inférieure à 4°C, et préférablement inférieure à 0°C.

5. Procédé selon une ou plusieurs des revendications précédentes, dans lequel ladite garniture (F) est composée de sauce tomate (R) et de béchamel (B) et, pendant ladite étape de dosage, ladite sauce tomate (R) et ladite béchamel (B) sont déposées sur ladite feuille de pâte (P), indépendamment l'une de l'autre, pour former des lasagnes semi-finies (L), composées uniquement d'une couche inférieure définie par ladite feuille de pâte (P) et d'une couche supérieure composée de bandes adjacentes (23, 23') de sauce tomate (R) et de béchamel (B).

6. Procédé selon une ou plusieurs des revendications précédentes, comprenant une étape d'emballage dans laquelle un nombre prédéterminé desdites portions ou *"briques"* M est placé sur un plateau (V), qui est ensuite scellé pour obtenir un produit emballé.

7. Appareil pour la préparation de lasagnes, en particulier des lasagnes à la Bolognaise, selon le procédé tel que revendiqué dans une ou plusieurs des revendications précédentes, comprenant :
- des moyens (2) pour fournir une garniture (F) ;
- des moyens (3) pour fournir une feuille de pâte (P) ;
- des moyens (4) pour déposer la garniture (F) sur la feuille de pâte (P) pour obtenir au moins une couche de lasagnes semi-finies (L) ;
- une première ligne (6) pour le raccordement fluidique desdits moyens (2) pour fournir la garniture (F) auxdits moyens de dépôt (4) ;
- une deuxième ligne (9) pour le raccordement desdits moyens (3) pour fournir la feuille de pâte (P) auxdits moyens de dépôt (4) ;
lesdits moyens (2) pour fournir la garniture (F) comprenant un équipement de cuisson dans lequel la garniture (F) est cuite,
**caractérisé en ce qu'**il comprend, en outre, des premiers moyens de refroidissement (13) prévus directement en aval des moyens (2) pour cuire la garniture (F), pour refroidir cette dernière avant et/ou pendant le dépôt à une température inférieure à la température ambiante de travail, des moyens de découpe (15) pour découper ladite au moins une couche de lasagnes semi-finies (L) en une pluralité de portions (M) de formes et de dimensions prédéterminées, des troisièmes moyens de refroidissement (16) interposés entre lesdits moyens de dépôt (4) et lesdits moyens de découpe (15) pour refroidir ladite au moins une couche de lasagnes semi-finies (L) à une température inférieure à ladite température de dépôt.

8. Appareil selon la revendication 7, dans lequel ladite température de dépôt est inférieure à 25°C, préférablement inférieure à 20°C, et plus préférablement de 5°C à 15°C.

9. Appareil selon une ou plusieurs des revendications précédentes, comprenant des deuxièmes moyens de refroidissement (14) pour refroidir ladite feuille de pâte (P) à une température inférieure à 30°C, et préférablement inférieure à 20°C, lesdits deuxièmes moyens de refroidissement (14) étant disposés le long de ladite deuxième ligne (9), en amont desdits moyens de dosage (4).

10. Appareil selon la revendication 7, dans lequel ladite température de découpe est inférieure à 4°C, préférablement inférieure à 0°C.

11. Appareil selon la revendication 7, dans lequel ladite première ligne de raccordement fluidique comprend des première et deuxième conduites (12, 12') pour amener la sauce tomate (R) et la béchamel (B) indépendamment l'une de l'autre auxdits moyens de dépôt (4).

12. Appareil selon la revendication 11, dans lequel lesdits moyens de dépôt (4) comprennent une pluralité d'unités de dosage (5, 5', 5", 5"') disposées côte à côte, en relation fluidique entre elles, et raccordées en alternance auxdites première et deuxième conduites (12, 12') pour le dépôt de bandes adjacentes (23, 23') de sauce tomate (R) ou de béchamel (B), ayant chacune une largeur prédéterminée (1), sur ladite feuille de pâte (P).

13. Appareil selon la revendication 12, dans lequel lesdits moyens de découpe (15) comprennent des outils à bords tranchants (18), dont la distance d'espacement mutuel (d) correspond essentiellement à ladite largeur (1) de chacune desdites bandes (23', 23), pour découper ladite au moins une couche de lasagnes semi-finies (L) au niveau des points de séparation (24) entre celles-ci.
